# EUROPEAN PATENT APPLICATION

(11) **EP 4 556 307 A1**
(43) Date of publication of application: **21.05.2025**
(21) Application number: 24203443.7
(22) Date of filing: 30.09.2024
(51) Int. Cl.: B60N 2/865

(54) **HEADREST MODULE**

(30) Priority: 20.11.2023 KR 20230161270
(71) Applicant: D&M Solutions Co., Ltd., Ulsan 44611 (KR)
(72) Inventor: SHIN, Kang Mok, 16642 Gwonseon-gu, Suwon-si, Gyeonggi-do (KR); CHOI, Il Hang, 16642 Gwonseon-gu, Suwon-si, Gyeonggi-do (KR); SHIN, Si Kyoung, 16642 Gwonseon-gu, Suwon-si, Gyeonggi-do (KR); SHIN, Chang Young, 16642 Gwonseon-gu, Suwon-si, Gyeonggi-do (KR); YOON, Dae Hwan, 16642 Gwonseon-gu, Suwon-si, Gyeonggi-do (KR)
(74) Representative: von Bülow & Tamada

(57) **Abstract**

The present invention provides a headrest module including a mounting base; a rack bracket having a rack gear part and mounted on the mounting base to enable translational motion along an extended direction of the rack gear part; a moving gear having a pinion gear part engaged with the rack gear part and being installed to enable rotational motion and translational motion with respect to the mounting base; and a stopping unit formed to stop the rotational motion of the moving gear as the pinion gear part, which makes the rotational motion due to the translational motion of the rack gear part, makes the translational motion in one direction.

## Description

### BACKGROUND

### 1. FIELD

The present invention relates to a headrest module that forms part of a car seat.

### 2. DESCRIPTION OF RELATED ART

Generally, a headrest for automobile is installed on an upper end portion of a seat and goes up/down and/or rotates to suit a height of an occupant's head and is also used as a head supporter. The headrest also supports the occupants' heads in the event of a rear-end collision of a vehicle to prevent neck injuries.

Recently, the headrest is not only used to prevent neck injuries or as a head supporter, but this is also used as object to which monitors for video viewing are attached. In this case, the headrest is manufactured such that rear passengers can move the headrest linearly in forward-backward direction to watch video content in the vehicle.

However, a slide module for linear movement of the headrest has a large number of parts, so the structure of the slide module is complex and the manufacturing process of the slide module is also difficult. In addition, the headrest has limitations in slimming by employing the slide module. This may also be an obstacle to maximizing interior space in the era of self-driving vehicles.

The above-described background art is technical information retained by the inventor to derive embodiments of the present invention or acquired by the inventor while deriving the present invention, and thus should not be construed as art that was publicly known prior to the filing date of the present application.

### SUMMARY

The present invention provides a headrest module capable of reducing the number of required parts and simplifying a manufacturing process.

In addition, the present invention provides a headrest module capable of being slimmer than before while providing a function to adjust a position of the headrest

According to an aspect of the present disclosure, a headrest module includes: a mounting base; a rack bracket having a rack gear part and mounted on the mounting base to enable translational motion along an extended direction of the rack gear part; a moving gear having a pinion gear part engaged with the rack gear part and being installed to enable rotational motion and translational motion with respect to the mounting base; and a stopping unit formed to stop the rotational motion of the moving gear as the pinion gear part, which makes the rotational motion due to the translational motion of the rack gear part, makes the translational motion in one direction.

The mounting base may include a base plate having a first guide groove that guides the translational motion of the moving gear, and the moving gear may further include a central shaft rotatably inserted into the first guide groove.

The first guide groove may include an advance-retreat guide part extending along a direction toward the stopping unit.

The mounting base may further include a cover plate having a second guide groove that is formed to correspond to the first guide groove and guides the translational motion of the moving gear together with the first guide groove, and being disposed on an opposite side of the base plate based on the rack bracket.

The headrest module may further include a drive unit configured to cause the central shaft to make translational motion toward the stopping unit.

The drive unit may include a checking spring configured to elastically bias the central shaft toward the stopping unit.

The stopping unit may include a first engaging part, and the moving gear may include a second engaging part disposed to engage with the first engaging part as the moving gear approaches the stopping unit.

The first engaging part may include a first gear part formed on the mounting base, and the second engaging part may include a second gear part located at a different level from the pinion gear part.

The rack bracket may further include a first guidance member that is located at one end portion of the rack gear part and guides the moving gear in a direction away from the rack gear part.

The first guidance member may include a guidance surface formed to form an obtuse angle with respect to the extended direction of the rack gear part.

The rack bracket may further include a second guidance member that is located at the other end portion of the rack gear part and guides the moving gear in a direction toward the rack gear part.

The first guide groove may further include a spaced guide part that communicates with the advance-retreat guide part, and extends along a direction intersecting an extended direction of the advance-retreat guide part to guide the moving gear guided by the first guidance member.

The headrest module may further include a drive unit configured to cause the central shaft to make translational motion in one of a direction toward the stopping unit and a direction away from the rack gear part, depending on the position of the central shaft, in which the drive unit may include a checking spring configured to elastically bias the central shaft toward the one direction.

The headrest module may further include a return unit configured to restore the rack bracket to its original position while the moving gear is guided in the direction away from the rack gear part.

The return unit may include a return spring connecting the rack bracket and the mounting base.

### BRIEF DESCRIPTION OF DRAWINGS

FIG. 1 is an assembled perspective view of a headrest module according to an embodiment of the present invention.
FIG. 2 is an exploded perspective view showing a mounting base, a moving gear, and a drive unit of FIG. 1.
FIGS. 3 to 9 are diagrams for describing the operational relationship between a rack bracket and a moving gear (and stopping unit) in FIG. 1.

### DETAILED DESCRIPTION

Hereinafter, exemplary embodiments of the present invention will be described in detail with reference to the accompanying drawings.

However, the present invention is not limited to embodiments set forth herein, but may be modified variously and implemented in various different forms. However, the embodiment is provided to ensure that the disclosure of the present invention is complete and to fully inform those skilled in the art of the scope of the invention. Therefore, the present invention is not limited to the embodiments disclosed below, but it should be understood that substitution or addition of components of one embodiment and components of another embodiment include all changes, equivalents, and substitutions included in the technical spirit and scope of the present invention.

It should be understood that the accompanying drawings are provided only in order to allow exemplary embodiments of the present disclosure to be easily understood, and the spirit of the present disclosure is not limited by the accompanying drawings, but includes all the modifications, equivalents, and substitutions included in the spirit and the scope of the present disclosure. In the drawings, components may be expressed exaggeratedly large or small in size or thickness for convenience of understanding, etc., but the scope of protection of the present invention should not be construed as limited.

Terms used in the present specification are used only in order to describe specific implementation examples or embodiments rather than limiting the present invention. Singular forms are intended to include plural forms unless the context clearly indicates otherwise. In the specification, terms such as -include, -consist of, etc., are intended to designate the existence of features, numbers, steps, operations, components, parts, or a combination thereof described in the specification. Also, it should be understood that terms such as "-include" and "-consist of" do not preclude the existence or addition possibility of one or more other features or numbers, steps, operations, components, parts, or combinations thereof.

The terms including ordinal numbers such as 'first' and 'second' may be used to describe various components, but these components are not limited by these terms. The terms are used to distinguish one component from another component.

It is to be understood that when one element is referred to as being "connected to/communicate with" or "coupled to" another element, it may be connected directly to or coupled directly to another element or be connected to/communicate with or coupled to another element, having the other element intervening therebetween. On the other hand, it should be understood that when one element is referred to as being "connected directly to/communicate with" or "coupled directly to" another element, it may be connected to or coupled to another element without the other element interposed therebetween.

When a component is referred to as being "on top" or "below" another component, it should be understood that not only is it disposed directly on top of other components, but there may also be other components in between.

Unless indicated otherwise, it is to be understood that all the terms used in the specification including technical and scientific terms have the same meaning as those that are generally understood by those who skilled in the art. Terms generally used and defined by a dictionary should be interpreted as having the same meanings as meanings within a context of the related art and should not be interpreted as having ideal or excessively formal meanings unless being clearly defined otherwise in the present specification.

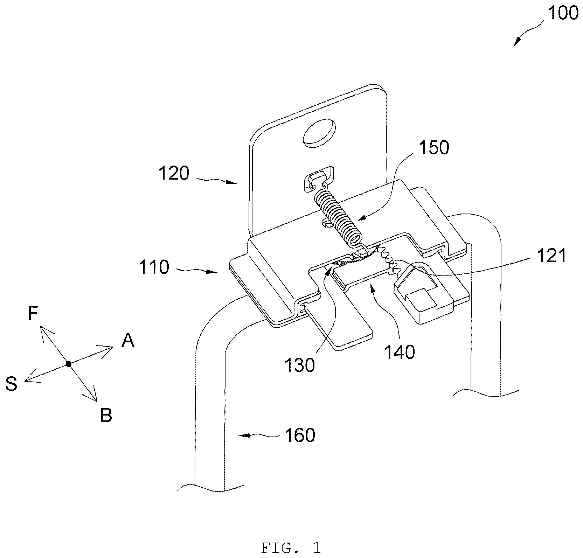

FIG. 1 is an assembled perspective view of a headrest module according to an embodiment of the present invention.

Referring to the drawing, a headrest module 100 forms most of a mechanical structure of a headrest. When a cushion is added to the headrest module 100 and then an outer shell is finally covered, it becomes the headrest. The headrest is connected to a seat back of a vehicle (not illustrated) and supports a head of a seated person.

The headrest module 100 may include a mounting base 110, a rack bracket 120, a moving gear 130, a stopping unit 140, a return unit 150, and a stay 160.

The mounting base 110 may be mounted on the stay 160, which will be described later. Specifically, the mounting base 110 may be mounted on an upper surface of the stay 160.

The rack bracket 120 is mounted to enable translational motion along forward-backward direction F and B with respect to the mounting base 110. The forward-backward direction F and B refers to a combination of the forward direction F in which the headrest module 100 approaches a head of a person sitting on a seat (left direction in the drawing) and the backward direction B away therefrom (right direction in the drawing). The rack bracket 120 has a rack gear part 121. The rack gear part 121 may be disposed to follow the forward-backward direction F and B. The cushion may be coupled to the rack bracket 120.

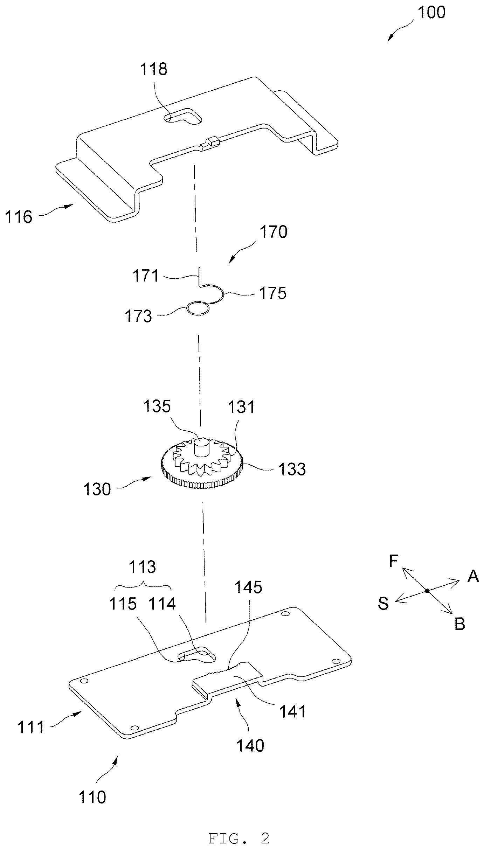

The moving gear 130 may have a gear part (pinion gear part 131, see FIG. 2) engaged with the rack gear part 121. The moving gear 130 is installed to enable not only rotational motion but also translational motion with respect to the mounting base 110.

The stopping unit 140 is configured to selectively stop a rotational motion of the moving gear 130. Specifically, the stopping unit 140 stops the rotation of the moving gear 130 as the moving gear 130 makes translational motion in a direction toward the stopping unit 140. The moving gear 130 may stop rotating as it engages the stopping unit 140. On the other hand, the moving gear 130 may make the translational motion in the direction away from the stopping unit 140 and make the rotational motion without limitation when spaced apart from the stopping unit 140. The stopping unit 140 may be integrated into the mounting base 110.

The return unit 150 moves the rack bracket 120 in the backward direction B and returns the rack bracket 120 to its original position. The return unit 150 may return the rack bracket 120 while the pinion gear part 131 is spaced apart from the rack gear part 121. The return unit 150 may be, for example, a return spring connecting the rack bracket 120 and the mounting base 110. When the return unit 150 is not employed, a user may manually return the rack bracket 120.

The stay 160 is connected to the seat back. As above described, the mounting base 110 may be coupled to an upper portion of the stay 160. Specifically, the mounting base 110 may be welded to the stay 160.

FIG. 2 is an exploded perspective view showing a mounting base, a moving gear, and a drive unit of FIG. 1.

Referring to this drawing, the mounting base 110 may have a base plate 111. A bottom surface of the base plate 111 may be welded to the stay 160. A first guide groove 113 may be formed in the base plate 111 to guide the translational motion of the moving gear 130. A central axis of rotation of the moving gear 130, that is, a central shaft 135, may be rotatably inserted into the first guide groove 113.

The first guide groove 113 may have an advance-retreat guide part 114 and a spaced guide part 115. The advance-retreat guide part 114 may extend along a direction (forward-backward direction F and B) toward the stopping unit 140. The spaced guide part 115 may extend in a direction intersecting the extended direction of the advance-retreat guide part 114, for example, along left and right directions (S and A). One end portion of the spaced guide part 115 may be connected to one end portion of the advance-retreat guide part 114. The spaced guide part 115 may guide the moving gear 130 in a direction away from the rack gear part 121. These 114 and 115 may have a generally vertical relationship to each other.

The mounting base 110 may also further include a cover plate 116. The cover plate 116 may define a space into which the rack bracket 120 is inserted, together with the base plate 111. To this end, the cover plate 116 is disposed on an opposite side of the base plate 111 with respect to the rack bracket 120. The cover plate 116 may be coupled to the base plate 111 or may be coupled to the stay 160. The cover plate 116 may have a second guide groove 118 corresponding to the first guide groove 113. The first guide groove and second guide groove 113 and 118 guide the moving gear 130 to make the translational motion and rotational motion while maintaining a stable posture.

The moving gear 130 may have an additional gear part 133 in addition to the pinion gear part 131. The gear part 133 may be located at a different level from the pinion gear part 131, specifically, on a lower side of the pinion gear part 131. The gear part 133 may have a larger size than the pinion gear part 131, but individual gears may be smaller than the pinion gear part 131. The central shaft 135 may be disposed at the centers of the gear parts 131 and 133.

The stopping unit 140 may have a body 141 integrated with the base plate 111. A first engaging part 145 may be formed on a surface of the body 141 facing the moving gear 130. The first engaging part 145 is engaged with the gear part 133 (second engaging part) as the moving gear 130 approaches. When the first engaging part 145 is formed as a gear (first gear part), the second engaging part 133 may also be formed as a gear (second gear part).

A drive unit 170 may be additionally provided to cause the moving gear 130 to make the translational motion within the first guide groove 113. The drive unit 170 causes the moving gear 130 to make the translational motion along the direction toward the stopping unit 140 within the advance-retreat guide part 114, or moves the moving gear 130 to make the translational motion along the direction away from the rack gear part 121 within the spaced guide part 115.

The drive unit 170 may be, for example, a checking spring that elastically biases the central shaft 135 along the directions. One end portion 171 of the checking spring may be mounted on the cover plate 116, and the other end portion 173 may be mounted on the central shaft 135. A middle area between both end portions 171 and 173 may be a tension part 175 that exerts elastic force. The tension part 175 may be a part bent to form an arc shape.

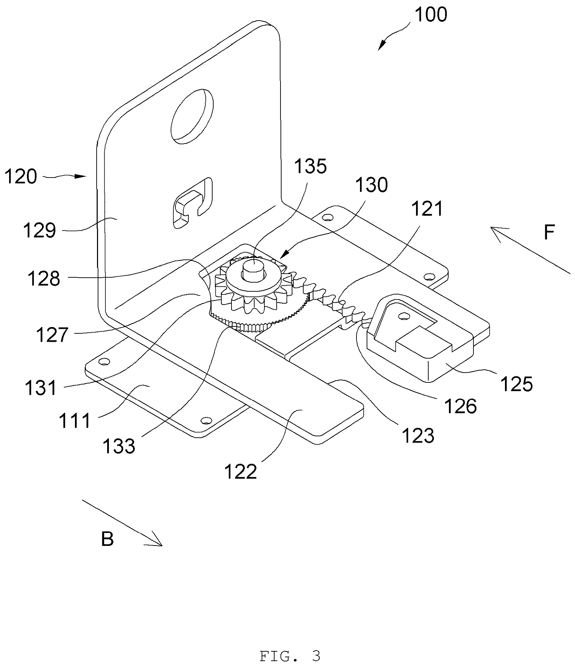

Now, a description of the method of adjusting the position of the headrest module 100 along the forward-backward direction F and B will be described with reference to FIGS. 3 to 9. FIGS. 3 to 9 are diagrams for describing the operational relationship between a rack bracket and a moving gear (and stopping unit) in FIG. 1.

First, the rack bracket 120 will be further described with reference to FIG. 3. The rack bracket 120 may have a main plate 122 on which the rack gear part 121 is formed. The main plate 122 may be disposed substantially parallel to the base plate 111. A cutout part 123 may be formed in the main plate 122. The rack gear part 121 is formed on one surface defining the cutout part 123.

A first guidance member 125 may be coupled to one end portion of the rack gear part 121 to guide the moving gear 130 in the direction away from the rack gear part 121. The first guidance member 125 may have a guidance surface 126 forming an obtuse angle with respect to the extended direction of the rack gear part 121. The guidance surface 126 is generally an inclined surface and may be a flat or curved surface.

A second guidance member 127 may be formed on the other end portion of the rack gear part 121. The second guidance member 127 may be specifically formed on the other side defining the cutout part 123. The second guidance member 127 is for guiding the moving gear 130 toward the rack gear part 121. The second guidance member 127 may also have a guidance surface 128 facing the guidance surface 126.

In this drawing, the first guidance member 125 is separately assembled to the main plate 122 and the second guidance member 127 is illustrated as being integrated into the main plate 122, but this is only considering the assembly method, and the present invention is not limited thereto. Both of the first guidance member and the second guidance member 125 and 127 may be integrated into the main plate 122, or may be assembled separately.

Referring back to FIG. 3, the headrest module 100 is moved to its maximum in the backward direction B. The pinion gear part 131 is engaged with the rack gear part 121 at one end portion. The second gear part 133 is engaged with the first gear part 145. In order to adjust the position of the headrest module 100 along the forward-backward direction F and B, the user should move the rack bracket 120 in the forward direction F.

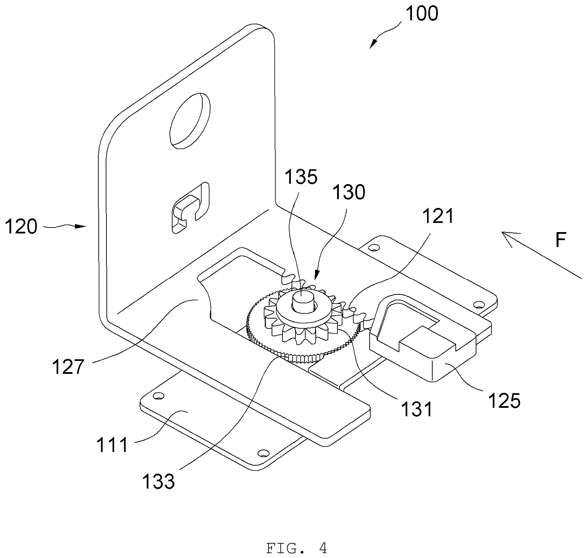

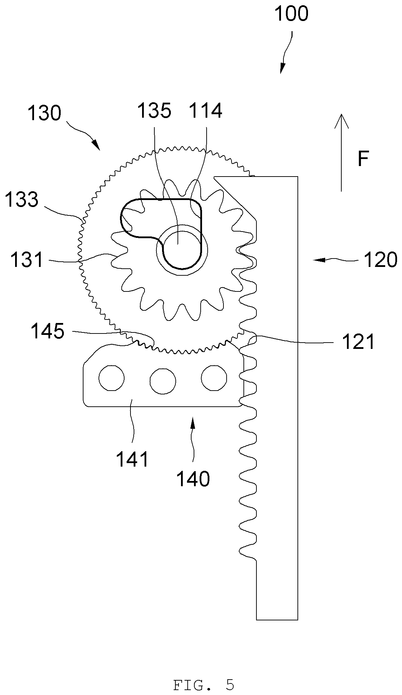

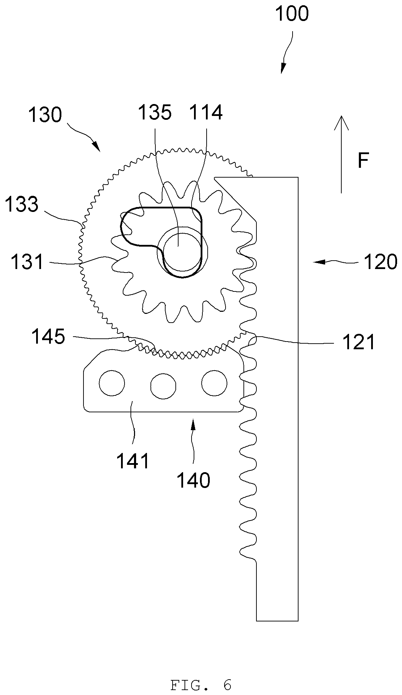

Referring to FIG. 4, as the rack bracket 120 moves in the forward direction F, the pinion gear part 131 is located in another portion of the rack gear part 121, for example, the central portion. During this movement process, the change in the positional relationship between the rack gear part 121 and the pinion gear part 131 will be described with reference to FIGS. 5 and 6.

Referring to FIGS. 5 and 6, as the rack bracket 120 is pulled in the forward direction F, the rack gear part 121 rotates the pinion gear part 131 counterclockwise in the drawing. Due to the action between the rack gear part 121 and the pinion gear part 131, the moving gear 130 makes the translational motion in the forward direction F. Specifically, the central shaft 135 moves along the forward direction F within the advance-retreat guide part 114. As a result, as the second gear part 133 is spaced apart from the first gear part 145, the rotational motion of the pinion gear part 131 becomes possible (see FIG. 6).

When the force pulling the rack bracket 120 is removed, the moving gear 130 makes the translational motion toward the stopping unit 140 by the force of the drive unit 170 (see FIG. 2). As the second gear part 133 is engaged with the first gear part 145, the rotational motion of the moving gear 130 becomes impossible (see FIG. 5). Accordingly, the user may fix the headrest module 100 at a desired position.

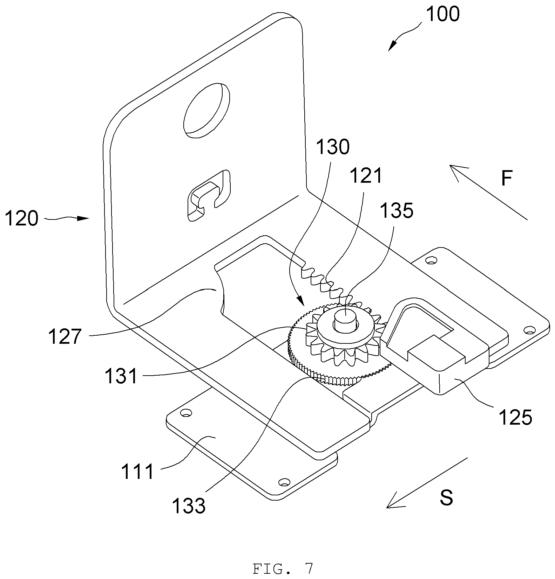

Referring to FIG. 7, the user may pull the rack bracket 120 to the maximum. Accordingly, the pinion gear part 131 is engaged with the end portion area of the rack gear part 121. The pinion gear part 131 is engaged with the first guidance member 125 and receives force in the direction away from the rack gear part 121 (separation direction S).

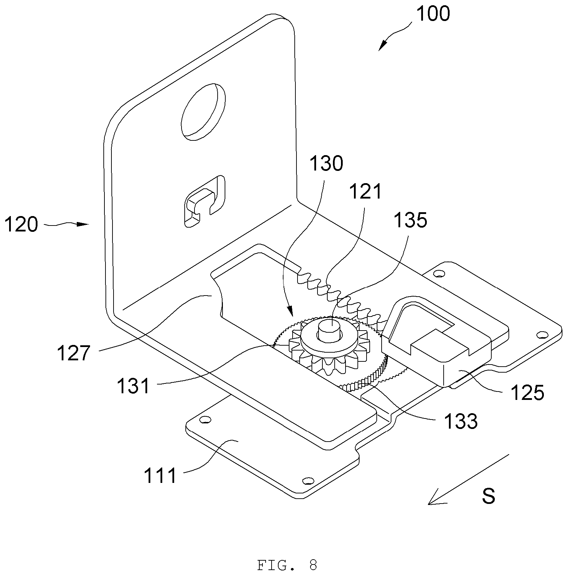

Referring to FIG. 8, the central shaft 135 of the moving gear 130 is translated into the position spaced apart from the rack gear part 121 along the spaced guide part 115 of the first guide groove 113. The moving gear 130 moves by receiving the elastic force of the checking spring 170. The moving gear 130 is moved along the separation direction S. Now, the pinion gear part 131 is out of engagement with the rack gear part 121.

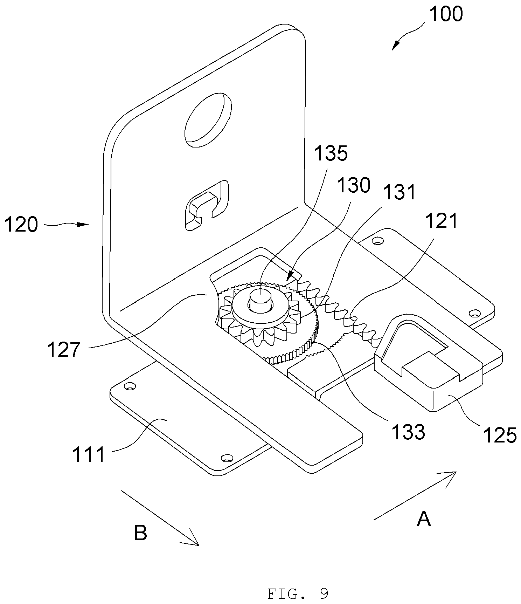

Referring to FIG. 9, in the state where the pinion gear part 131 is spaced apart from the rack gear part 121, the rack bracket 120 moves in the backward direction B by the action of the return unit 150. The pinion gear part 131 is engaged with the second guidance member 128 and receives force in the direction A approaching the rack gear part 121. Accordingly, the moving gear 130 may move along the spaced guide part 115 and return to the state shown in FIG. 3. The moving gear 130 moves against the elastic force of the checking spring 170.

Summarizing the above, as the user pulls the rack bracket 120 in the forward direction F, the headrest module 100 may be located in one of the positions from the state (position) in FIG. 3 to the state (position) in FIG. 7. The rack bracket 120, moving gear 130, and stopping unit 140 allow the rack bracket 120 to be advanced and fixed (in an advanced position) while moving between the states of FIGS. 5 and 6. When the user pulls the rack bracket 120 in the forward direction F to the maximum, the return spring acts while the pinion gear part 131 is separated from the rack gear part 121, so the headrest module 100 may automatically return to its fully retreated state.

According to the headrest module of the present invention configured as described above, the moving gear is formed to make rotational and translational motions by the translational motion of the rack bracket mounted on the mounting base and the rotational motion of the moving gear is stopped by the stopping unit, so it is possible to reduce the number of parts for adjusting the position of the headrest module and simplify the manufacturing process. Furthermore, the headrest module can be slimmer than before.

## Claims

1. A headrest module, comprising:
a mounting base;
a rack bracket having a rack gear part and mounted on the mounting base to enable translational motion along an extended direction of the rack gear part;
a moving gear having a pinion gear part engaged with the rack gear part and being installed to enable rotational motion and translational motion with respect to the mounting base; and
a stopping unit formed to stop the rotational motion of the moving gear as the pinion gear part, which makes the rotational motion due to the translational motion of the rack gear part, makes the translational motion in one direction.

2. The headrest module of claim 1, wherein the mounting base includes a base plate having a first guide groove that guides the translational motion of the moving gear, and
the moving gear further includes a central shaft rotatably inserted into the first guide groove.

3. The headrest module of claim 1 or 2, wherein the first guide groove includes an advance-retreat guide part extending along a direction toward the stopping unit.

4. The headrest module of one of the claims 1 to 3, wherein the mounting base further includes a cover plate having a second guide groove that is formed to correspond to the first guide groove and guides the translational motion of the moving gear together with the first guide groove, and being disposed on an opposite side of the base plate based on the rack bracket.

5. The headrest module of one of the claims 2 to 4, further comprising:
a drive unit configured to cause the central shaft to make translational motion toward the stopping unit.

6. The headrest module of claim 5, wherein the drive unit includes a checking spring configured to elastically bias the central shaft toward the stopping unit.

7. The headrest module of one of the claims 1 to 6, wherein the stopping unit includes a first engaging part, and
the moving gear includes a second engaging part disposed to engage with the first engaging part as the moving gear approaches the stopping unit.

8. The headrest module of claim 7, wherein the first engaging part includes a first gear part formed on the mounting base, and
the second engaging part includes a second gear part located at a different level from the pinion gear part.

9. The headrest module of one of the claims 3 to 8, wherein the rack bracket further includes a first guidance member that is located at one end portion of the rack gear part and guides the moving gear in a direction away from the rack gear part.

10. The headrest module of claim 9, wherein the first guidance member includes a guidance surface formed to form an obtuse angle with respect to the extended direction of the rack gear part.

11. The headrest module of claim 9 or 10, wherein the rack bracket further includes a second guidance member that is located at one end portion of the rack gear part and guides the moving gear in a direction toward the rack gear part.

12. The headrest module of one of the claims 1 to 11, wherein the first guide groove further includes a spaced guide part that communicates with the advance-retreat guide part, and extends along a direction intersecting an extended direction of the advance-retreat guide part to guide the moving gear guided by the first guidance member.

13. The headrest module of claim 12, further comprising:
a drive unit configured to cause the central shaft to make translational motion in one of a direction toward the stopping unit and a direction away from the rack gear part, depending on the position of the central shaft,
wherein the drive unit includes a checking spring configured to elastically bias the central shaft toward the one direction.

14. The headrest module of one of the claims 9 to 13, further comprising:
a return unit configured to restore the rack bracket to its original position while the moving gear is guided in the direction away from the rack gear part.

15. The headrest module of claim 14, wherein the return unit includes a return spring connecting the rack bracket and the mounting base.
